# EUROPÄISCHE PATENTSCHRIFT

(11) **EP 3 622 183 B1**
(45) Veröffentlichungstag und Bekanntmachung des Hinweises auf die Patenterteilung: **07.06.2023**
(21) Anmeldenummer: 18720609.9
(22) Anmeldetag: 27.04.2018
(51) Int. Cl.: F15B 21/0427, F16K 49/00, F15B 13/04, F16K 11/07

(54) **VENTIL**
VALVE
SOUPAPE

(30) Priorität: 11.05.2017 DE 102017004531
(43) Veröffentlichungstag der Anmeldung: 18.03.2020
(73) Patentinhaber: HYDAC Systems & Services GmbH, 66280 Sulzbach (DE)
(72) Erfinder: BIWERSI, Sascha Alexander, 66693 Mettlach (DE); STÖNNER, Christoph, 66386 St. Ingbert (DE); TEIGA, Michael Timothy, Loudonville, Ohio 44842 (US)
(74) Vertreter: Bartels und Partner, Patentanwälte
(86) Internationale Anmeldenummer: PCT/EP2018/060865
(87) Internationale Veröffentlichungsnummer: WO 2018/206316

(56) Entgegenhaltungen:
- EP-A1- 1 495 961
- EP-A1- 3 299 638
- WO-A1-2018/059727
- US-A- 4 059 042
- US-A- 4 972 762

## Beschreibung

Die Erfindung betrifft ein Ventil mit den Merkmalen im Oberbegriff von Anspruch 1.

Durch die WO 2008/098559 A1 ist ein Steuerblock mit einer Vielzahl von Steuerblockelementen bekannt, in denen jeweils eine Ventilanordnung zur Ansteuerung eines jeweiligen hydraulischen Verbrauchers vorgesehen ist, wobei der Steuerblock einen Ölkanal aufweist, der unabhängig von der Ansteuerung der Ventilanordnung von einem Ölstrom zum Temperieren von zumindest einem Steuerblockelement durchströmt ist. Somit kann selbst bei langer Nichtbetätigung einer Ventilscheibe des Steuerblocks eine Erwärmung derselben sichergestellt werden, so dass bei einer Betätigung eines Ventils ein Klemmen des zugehörigen Steuerschiebers verhindert ist.

Bevorzugt ist bei der bekannten Lösung vorgesehen, dass der Ölstrom im Wesentlichen konstant ist, da auf diese Weise eine gleichmäßige Erwärmung des Ventilgehäuses sichergestellt werden kann. Das Aufrechterhalten eines konstanten Ölstroms setzt jedoch fortlaufend eine aufzubringende Pumpenleistung voraus, wofür Energie benötigt wird, und da der Steuerschieber indirekt über das Ventilgehäuse mit dem Ölkanal erwärmt wird, kommt es bei dem dahingehenden Energieübertrag von Ventilgehäuse zu Steuerschieber zwangsläufig zu Energieverlusten, was die zur Erwärmung des Steuerschiebers benötigte Energie-Einsatzmenge gleichfalls erhöht. Auch benötigt es Zeit, bis ausgehend vom Ventilgehäuse der Steuerschieber erwärmt ist, so dass insbesondere bei kalten Startbedingungen ein Klemmen des Steuerschiebers im Ventil insoweit nicht mit Sicherheit verhindert ist.

Weitere Ventile gehen aus der US 4 059 042, der EP 1 495 961 A1 und der EP 3 299 638 A1 hervor.

Ausgehend von diesem Stand der Technik liegt der Erfindung die Aufgabe zugrunde, eine demgegenüber verbesserte Lösung zur Verfügung zu stellen. Die dahingehende Aufgabe löst ein Ventil mit den Merkmalen des Patentanspruches 1 in seiner Gesamtheit.

Dadurch, dass gemäß dem kennzeichnenden Teil des Patentanspruches 1 das erwärmbare Fluid in zumindest einer Stellung des Steuerschiebers, bei der jeweils der Druckversorgungsanschluss zumindest teilweise vom Nutzanschluss getrennt ist, von diesem Druckversorgungsanschluss ausgehend, über eine wärmeabgebende Verbindung in dem Steuerschieber, an die Rücklaufanschlüsse als Verlustvolumenstrom gelangt, der als Wärmequelle dienend zumindest Bereiche des Steuerschiebers erwärmt, ist sichergestellt, dass direkt die relevanten Bereiche des Steuerschiebers in sehr zeitnaher Weise erwärmt sind, so dass auch bei sehr kalten Bedingungen sichergestellt ist, dass der Steuerschieber bei Betrieb des Ventils im Ventilgehäuse nicht klemmen kann.

Da der Verlustvolumenstrom, der vorzugsweise über eine Barriereeinrichtung erwärmt ist, die als Fluidwiderstand dient, aufgrund von Reibung direkt Wärme auf das in den Steuerschieber ein- und/oder austretende Fluid überträgt, ist zum "Heizen" des Steuerschiebers nur eine kleine Volumenstrommenge notwendig, die bei geringer Pumpenleistung dem Ventil zur Verfügung gestellt werden kann und die im Übrigen unterbunden wird, sobald das Ventil ausgehend von seiner Druckversorgungsquelle eine Druckversorgung an seinem jeweiligen hydraulischen Nutzanschluss sicherstellt, an den ein hydraulischer Verbraucher, wie beispielsweise ein Arbeitszylinder, anschließbar ist. Da bei der Ansteuerung eines solchen hydraulischen Verbrauchers grundsätzlich relativ hohe Volumenstrommengen gegenüber dem angesprochenen Verlustvolumenstrom benötigt werden, erreicht bereits aufgrund des dahingehenden Lastbetriebes das hydraulische Ventil seine gewünschte Betriebstemperatur, die einem Klemmen des Steuerschiebers entgegenwirkt, und es braucht dann nicht, wie im Stand der Technik aufgezeigt, für eine fortlaufende Erwärmung ein permanenter Volumenstrom als Wärmemittel zur Verfügung gestellt werden.

Bei einer bevorzugten Ausführungsform des erfindungsgemäßen Ventils ist vorgesehen, dass der Verlustvolumenstrom über eine Barriereeinrichtung erwärmbar ist, die als Fluidwiderstand dienend aufgrund von Reibung Wärme auf das in den Steuerschieber ein- und/oder austretende Fluid überträgt. Dergestalt lässt sich energetisch besonders günstig die entstehende Reibwärme auf das Fluid als Wärmeträger übertragen.

Bei einer weiteren bevorzugten Ausführungsform des erfindungsgemäßen Ventils weist die Barriereeinrichtung mindestens eine Art Regelblende auf, deren freier Blendenquerschnitt im Regelbetrieb sich aus einer Zustellbewegung des Steuerschiebers gegenüber dem Ventilgehäuse im Bereich des einen Druckversorgungsanschlusses und/oder der Rücklaufanschlüsse ergibt, in die bzw. in den die Wärme abgebende Verbindung im Steuerschieber ausmündet. Da dergestalt die Barriereeinrichtung im Ventilgehäuse integriert ist und von dem bewegbaren Steuerschieber angesteuert wird, ist dergestalt in besonders platzsparender Weise die Wärme erzeugende und abgebende Einrichtung im Ventil aufgenommen.

Bei einer weiteren bevorzugten Ausführungsform des erfindungsgemäßen Ventils ist vorgesehen, dass mit zunehmender Vergrößerung des Blendenquerschnitts der einen Art Regelblende an dem einen Druckversorgungsanschluss bei gleichzeitiger Verengung desselben an den Rücklaufanschlüssen mittels einer weiteren Art Regelblende, deren freier Blendenquerschnitt im Regelbetrieb sich aus einer Zustellbewegung des Steuerschiebers gegenüber dem Ventilgehäuse im Bereich des einen zuordenbaren Nutzanschlusses ergibt, der Volumenstrom von diesem einen Druckversorgungsanschluss zu diesem einen zuordenbaren Nutzanschluss zunimmt. Durch die jeweils weitere Art Regelblende lässt sich ein Fluidzustrom oder Fluidabfluss zu bzw. von dem jeweiligen Nutzanschluss als eine Art weitere, zusätzliche Barriereeinrichtung einsetzen, um dergestalt den Wärmeeintrag in das Fluid durch Androsseln desselben durch die dabei entstehende Reibungswärme zu erhöhen.

Vorzugsweise ist bei dem erfindungsgemäßen Ventil die wärmeabgebende Verbindung in dem Steuerschieber durch einen Längskanal gebildet, der mittels Querkanälen im Regelbetrieb zumindest teilweise in Richtung des einen Druckversorgungs- und der Rücklaufanschlüsse austritt. Die Längs- und Querkanalführung innerhalb des Steuerschiebers führt zu dessen rascher Erwärmung, so dass der Wärmeeintrag unmittelbar am Steuerschieber erfolgt, was dessen Neigung, im Ventilgehäuse bei kalten Betriebszuständen klemmend stecken zu bleiben, deutlich reduziert. Das Zu- und Aufsteuern der jeweils einen Art Regelblende unterstützt strömungstechnisch dabei das Zu- bzw. Aufsteuern der jeweils weiteren Art Regelblende und umgekehrt.

Weitere vorteilhafte Ausführungsformen des erfindungsgemäßen Ventils sind Gegenstand der weiteren Unteransprüche.

Dem Ventil kann eine Individual-Druckwage hydraulisch vorgeschaltet sein, die an dem Druckversorgungsanschluss P des Ventils einen Steuerdruck zur Verfügung stellt, wodurch der Verlustvolumenstrom vorteilhaft vom Pumpendruck unabhängig ist.

Die Erfindung ist nachfolgend anhand eines in den Figuren dargestellten Ausführungsbeispiels näher erläutert. Es zeigen:
- Fig. 1: teilweise in Ansicht, teilweise in Schnittdarstellung das erfindungsgemäße Ventil; und
- Fig. 2: eine der Fig. 1 entsprechende Darstellung, jedoch diesmal mit der Darstellung des Steuerschiebers in Längsschnittdarstellung.

Das in den Figuren gezeigte erfindungsgemäße Ventil weist ein Ventilgehäuse 2 auf, in dem in einer Längsführung 4 ein Steuerschieber 6 verfahrbar geführt ist. In Blickrichtung auf die Figuren gesehen ist das Ventilgehäuse 2 an seinem unteren Ende der einfacheren Darstellung wegen abgeschnitten und somit nur teilweise dargestellt. In das Ventilgehäuse 2 sind Fluidanschlussstellen eingebracht, wie die beiden Nutzanschlüsse A, B, an die ein nicht näher dargestellter hydraulischer Verbraucher anschließbar ist, beispielsweise in Form eines Arbeitszylinders oder eines Hydromotors. Auf der gegenüberliegenden Seite zu den Nutzanschlüssen A, B greifen in das Ventilgehäuse 2 ein mittig angeordneter Druckversorgungsanschluss P ein sowie benachbart rechts und links davon zwei Tank- oder Rücklaufanschlüsse T1, T2.

Die beiden Nutzanschlüsse A, B münden an ihrem, dem Verbraucher jeweils abgewandten Ende in einen Steuerraum 8 bzw. 10 ein. In einen weiteren Steuerraum 12 mündet der Druckversorgungsanschluss P an seinem oberen Ende aus. Die genannten Steuerräume 8, 10, 12 umfassen dabei au-ßenumfangsseitig innerhalb des Ventilgehäuses 2 den Steuerschieber 6 und grenzen an die Längsführung 4 an. In der in den Figuren gezeigten Mittel- oder Neutralstellung des Steuerschiebers 6, bei dem der Druckversorgungsanschluss P von dem jeweiligen Nutzanschluss A, B mit seiner Fluidführung separiert ist, sind im Durchmesser reduzierte Bereiche 14, 16 des Steuerschiebers 6 vollständig innerhalb der beiden Steuerräume 8 bzw. 10 angeordnet. Der jeweilige Steuerraum 8, 10, 12 weist in Längsausrichtung des Steuerschiebers 6 gesehen innerhalb des Ventilgehäuses 2 wiederum jeweils zwei einander gegenüberliegende zylindrische Wandabschnitte 18 auf, die für alle Steuerräume im Wesentlichen gleich ausgebildet sind. Zu den Wandabschnitten 18 vergleichbar ausgebildete zylindrische Wandabschnitte 20 begrenzen zwei Fluidräume 22, 24, die gemäß der Darstellung nach den Figuren den Steuerschieber 6 nach unten hin nicht vollständig umfassen, wobei die zugeordneten Wandabschnitte 20 mit ihren unteren Ringabschnitten 26 in die Rücklaufanschlüsse T1, T2 ausmünden und diese zumindest teilweise randseitig begrenzen. Des Weiteren münden in die beiden Fluidräume 22, 24 zwei Druckbegrenzungsventile 28 ein, die als Sicherheitsventile gegen Druck-Überlastung fungieren. Während der Druckversorgungsanschluss P in Längsrichtung in das Ventilgehäuse 2 innerhalb der Zeichenebene einmündet, münden die beiden Rücklaufanschlüsse T1, T2 in einer Richtung in das Ventilgehäuse 2 ein, die senkrecht auf der Zeichenebene steht.

Beidseitig zu jedem vertieften Bereich 14, 16 des Steuerschiebers 6 sind an dessen Umfang einzelne Steuernuten 30 eingebracht, die zumindest teilweise keilförmig ausgebildet sind. Dabei münden die Steuernuten 30 mit ihrem einen freien Ende und einander zugewandt, zumindest in der gezeigten Mitten- oder Neutralstellung des Steuerschiebers 6, in die zugeordneten Steuerräume 8 bzw. 10 aus. Das jeweils andere freie Ende einer Steuernut 30 fährt dann je nach Verfahrstellung des Steuerschiebers 6 medienführend in den weiteren Steuerraum 12 mit seinen Wandabschnitten 18 ein bzw. in die zugeordneten Wandabschnitte 20 der beiden Fluidräume 22 bzw. 24. Insoweit bilden dann die einzelnen Steuernuten 30 des Steuerschiebers 6 mit Wandteilen des Ventilgehäuses, die die genannten Wandabschnitte 20 der Fluidräume 22, 24 sowie die Wandabschnitte 18 des Steuerraums 12 begrenzen, Regelblenden aus, die in Folge zur Abgrenzung gegenüber zusätzlichen, noch näher vorzustellenden Regelblenden als weitere Regelblenden bezeichnet sind.

In Blickrichtung auf die Figuren gesehen ist das Ventilgehäuse 2 an seinem linken Ende mit einem Abschlussteil 32 versehen, das für die Rückstellung des Steuerschiebers 6 in seiner gezeigten Neutral- oder Mittelstellung eine Druckfederanordnung 34 aufweist, wobei sich die gezeigte Druckfeder zwischen zwei Kappenteilen 36, 38 erstreckt, von denen das eine Kappen-teil 36 stationär im Abschlussteil 32 angeordnet ist, und das weitere Kappenteil 38 lässt sich entgegen der Wirkung der Druckfeder auf das eine Kappenteil 36 zustellen. Für die dahingehende Verfahrbewegung des zweiten Kappenteils 38 ist dieses über eine Einbördelung in Anlage mit der freien linken Stirnseite des Steuerschiebers 6. Ferner ist das Kappenteil 38 über eine Bolzenführung 40 längsverfahrbar über eine Öffnung im Kappenteil 36 in diesem längsverfahrbar geführt, wobei das freie Ende des Verfahrbolzens mit der Innenwand des kappenartigen Abschlussteils 32 einen Anschlag oder eine Verfahrbegrenzung für die linke Seite des Steuerschiebers 6 darstellt.

Auf der rechten Seite ist am stirnseitigen Ende des Ventilgehäuses 2 ein weiteres zweites Abschlussteil 42 angeordnet, das zur Ansteuerung des Ventils über zwei eigenständige Pilotventile 44 verfügt. Der Steuerschieber 6 greift selbst mit einem im Durchmesser reduzierten Abschnitt in das zweite Abschlussteil 42 ein, wobei das zweite Abschlussteil 42 über eine manuell einstellbare Anschlageinrichtung 46 verfügt, um den Maximalhub des Steuerschiebers 6 entsprechend begrenzen zu können. Ferner greift ein schwenkbarer Kurbeltrieb 48 in den freien Endbereich des Steuerschiebers 6 auf seiner rechten Seite ein, um eine Notbetätigung von Hand im Bedarfsfall sicherstellen zu können. Die Abschlussteile 40, 42 sind Bestandteile des Ventilgehäuses 2 des erfindungsgemäßen Ventils.

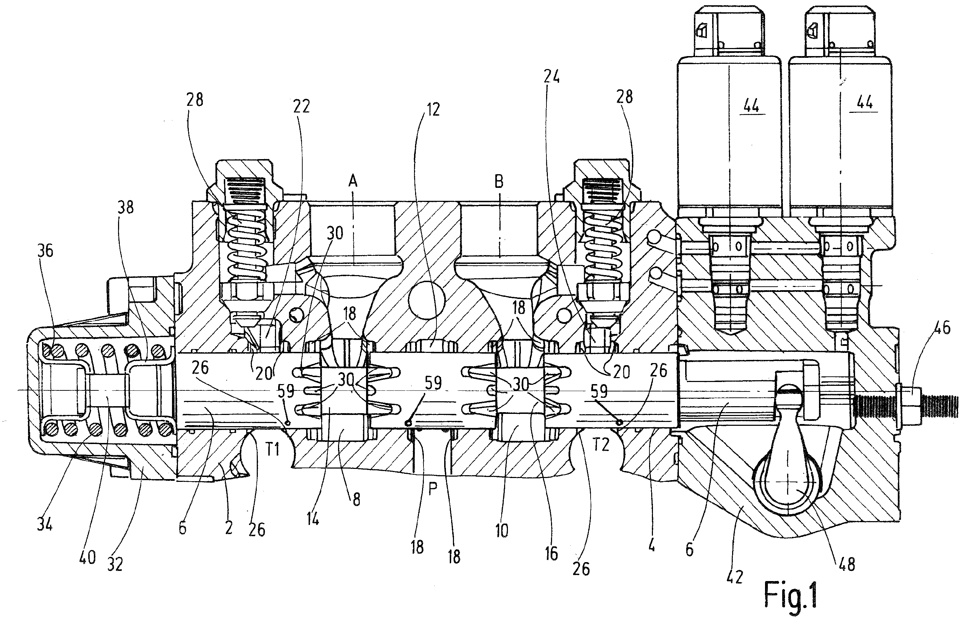

Die vorstehend beschriebene Ventilanordnung ist derart in der nachveröffentlichten DE 10 2016 011 860.1 der Schutzrechtsinhaberin aufgezeigt, so dass an dieser Stelle insoweit auf die vorliegende Konstruktion nicht mehr näher eingegangen wird. In diesem Zusammenhang sei lediglich noch erwähnt, dass der Druckversorgungsanschluss P direkt mit dem Fluiddruck einer Hydraulikpumpe versorgt werden kann; es besteht aber auch die Möglichkeit, im Sinne der vorstehend genannten nachveröffentlichten Patentschrift den Druckversorgungsanschluss P, wie beispielhaft in der Fig. 1 dieses Schutzrechts gezeigt, an den druckversorgenden Ausgang einer sog. Individualdruckwaage anzuschließen.

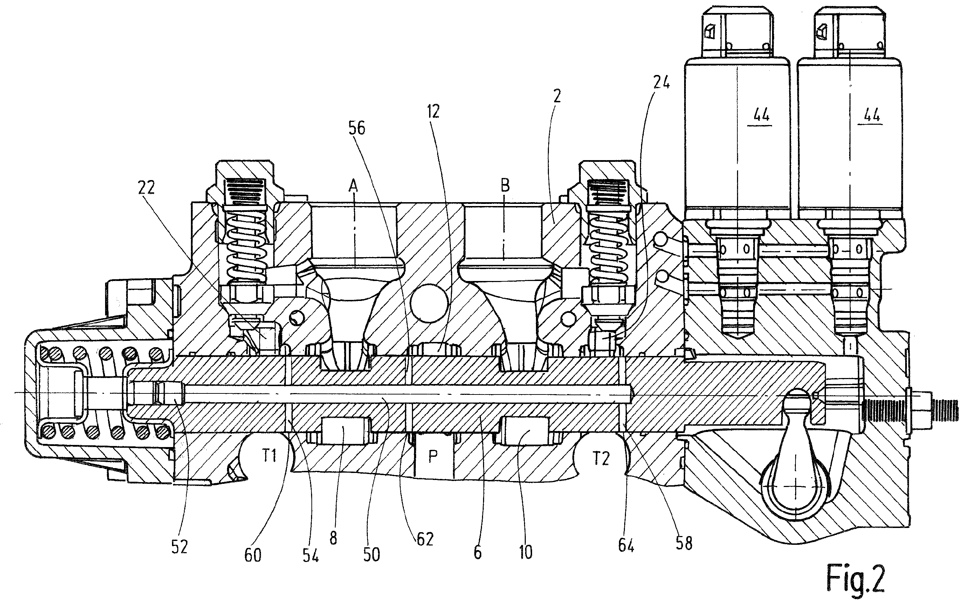

Wie insbesondere die Fig. 2 zeigt, ist der im Wesentlichen zylindrisch ausgebildete Steuerschieber 6 entlang seiner Mitten- oder Längsachse von einem Längskanal 50 in der Art einer Bohrung zumindest teilweise durchgriffen. In Blickrichtung auf die Fig. 2 gesehen mündet der Längskanal 50 auf seinem linken Ende am freien stirnseitigen Ende des Steuerschiebers 6 aus und ist in diesem Bereich mediendicht von einer Verschlussstopfenanordnung 52 verschlossen. Auf seiner rechten Seite mündet der Längskanal 50 mit einer Sackbohrung innerhalb des Ventilschiebers 6 aus. Quer zu diesem Längskanal 50 und in diesen einmündend sind für die Fluidführung drei Querkanäle 54, 56 und 58 vorhanden. An ihren freien Enden münden die dahingehenden Querkanäle 54, 56, 58 auf gegenüberliegenden Seiten an der Oberfläche des Steuerschiebers 6 aus. Das untere freie Ende, mit dem der jeweilige Querkanal 54, 56, 58 auf der Steuerschieberoberseite ins Freie tritt, ist in Fig. 1 mit 59 bezeichnet. Insoweit ist der besseren Darstellung wegen in der Fig. 1 der Steuerschieber 6 gegenüber der Darstellung nach der Fig. 2 geringfügig verdreht dem Betrachter zugewandt dargestellt. In Blickrichtung auf die Figuren gesehen mündet in der Mitten- oder Neutralstellung des Steuerschiebers 6 der linke Querkanal 54 mit etwa jeweils hälftiger Überdeckung in den rechten Wandabschnitt 20 des Fluidraums 22 aus sowie in die rechts daran angrenzenden Wandteile des Ventilgehäuses 2. Der weitere mittlere Querkanal 56 mündet mit seinen beiden gegenüberliegenden freien Enden in Blickrichtung auf die Fig. 2 gesehen wiederum in etwa hälftig in den linken Wandabschnitt 18 des Steuerraums 12 aus sowie in die diesbezüglich angrenzenden Wandteile des Ventilgehäuses 2. Der in Blickrichtung gesehen ganz rechte Querkanal 58 mündet mit seinen beiden gegenüberliegenden freien Enden nunmehr wiederum hälftig in den rechten Wandabschnitt 20 des rechten Fluidraums 24 aus sowie in die daran angrenzenden Wandteile des Ventilgehäuses 2, die nach rechts hin den Wandabschnitt 20 begrenzen. Die Wandabschnitte 18 bilden insoweit zylindrische Räume aus, die in die Steuerräume 8, 10 fließend übergehen und die mit gleichem radialem Abstand den Steuerschieber 6 umfassen.

Insoweit münden also die Querkanäle 54 und 58 im unteren Bereich des Ventilgehäuses 2 in den diesbezüglichen rechten linken Ringabschnitt 26 als Teil der zugehörigen Wandabschnitte 20 der Fluidräume 22 und 24 im Bereich der Rücklaufanschlüsse T1 bzw. T2 ein. Ferner umgeben die Wandabschnitte 20 mit den zugehörigen Ringabschnitten 26 den Steuerschieber 6 mit vorgebbarem, gleichbleibendem radialem Abstand bis auf den Eingriff der Rücklaufanschlüsse T1, T2 in das Ventilgehäuse 2. An der Stelle des Übergangs des jeweiligen Querkanals 54, 56, 58 zu den benachbarten Wandteilen des Ventilgehäuses 2 ist eine Art Regelblende 60, 62 sowie 64 gebildet, wobei je nach Verfahrrichtung des Steuerschiebers 6 die jeweiligen Regelblenden 60, 62, 64 sich, bezogen auf ihren freien Durchmesser, vergrößern oder entsprechend verringern. Die jeweiligen Regelblenden 60, 62, 64 bilden dabei eine Art Barriereeinrichtung aus, die es dem zu Anfang des Betriebes zunächst kalten Fluid, wie Hydraulikmedium, erschwert, vom Druckversorgungsanschluss P über den Querkanal 62 in den Längskanal 50 zu gelangen und von dort über die korrespondierenden, als Ablaufstrecken dienenden Querkanäle 54 und 58 zurück zu den Rücklaufanschlüssen T1 bzw. T2.

Selbst wenn, wie in den Fig. 1 und 2 dargestellt, das Ventil nicht in Betrieb ist und der Ventilschieber 6 seine dort gezeigte Mitten- oder Neutralstellung eingenommen hat, kann über einen relativ geringen Verlustleistungsstrom am Druckversorgungsanschluss P durch Einsatz der Barriereeinrichtung mit entstehender Reibungswärme an den aufgezeigten Regelblenden 60, 62, 64 zunächst das Innere des Steuerschiebers 6 und dann der gesamte Steuerschieber 6 erwärmt werden, was es verhindert, dass er im kalten Zustand des Ventils im Betrieb desselben in der Längsführung 4 in klemmender Weise hängen bleibt. Bei der insoweit Reibungswärme erzeugenden Position des Steuerschiebers 6 ist dieser, in Blickrichtung auf die Figuren gesehen, in seiner linken Anschlagstellung mit seinem freien Ende am Kappenteil 38 in Anlage.

Wird in Blickrichtung auf die Figuren gesehen der Steuerschieber 6 beispielhaft nach links verschoben, kommen die linksseitig angeordneten Steuernuten 30 im Bereich des Nutzanschlusses B in fluidführende Verbindung mit dem Steuerraum 12 mit dem Fluid unter vorgebbarem Druck führenden Druckversorgungsanschluss P, so dass insoweit dann der Nutzanschluss B über seinen Steuerraum 10 mit seinem angeschlossenen hydraulischen Verbraucher mit Fluid versorgt ist. Etwaig rückströmendes Fluid, von dem hydraulischen Verbraucher stammend, wird dann über den Nutzanschluss A und den linken Steuerraum 8 mittels den linksseitig angeordneten Steuernuten 30 im Steuerschieber 6 in den linken Fluidraum 22 abgegeben und von dort dem Rücklaufanschluss T1 zugeführt. Bei der dahingehenden Ventilstellung ist dann der weitere Rücklaufanschluss T2 vom benachbart angeordneten Nutzanschluss B abgesperrt. Bei der dahingehenden Verfahrbewegung des Steuerschiebers 6 werden die Regelblenden 60, 64 an den Rücklaufanschlüssen T1 bzw. T2, bezogen auf ihren freien Durchmesser, vergrößert und der freie Querschnitt der Regelblende 62 am Druckversorgungsanschluss P verringert, so dass die Reibungswärme an den Blenden 60, 64 abnimmt und an der Blende 62 zunimmt, bis diese völlig von den benachbarten Gehäuseteilen des Ventilgehäuses verschlossen ist. Insoweit gelangt vorzugsweise bereits vorher erwärmtes Fluid im Rücklauf vom Nutzanschluss A über den Fluidraum 22 zum Rücklaufanschluss T1, und zwar immer noch über den gegenüber dem Längskanal 50 verengten Querkanal 54 mit der Folge, dass auch insoweit im Rücklauf das Fluid sich durch Reibungswärme noch weiter erwärmen kann.

Wie dargelegt, bleibt dabei der Rücklaufanschluss T2 gesperrt, so dass insoweit in diesem Bereich keine Erwärmung innerhalb des Fluids entsteht. Bei einer Verfahrrichtung des Steuerschiebers 6 nach rechts drehen sich die Verhältnisse insoweit um, als der Druckversorgungsanschluss P dann über die korrespondierend zugeordneten Steuernuten 30 den Nutzanschluss A versorgt und der Nutzanschluss B ist an den Rücklaufanschluss T2 fluidführend angeschlossen ist. Im dahingehenden Fall wird der mittlere Querkanal 56 bei vollständig geöffneter Regelblende 62 über den Druckversorgungsanschluss P mit Fluid über den Steuerraum 12 versorgt und die beiden weiteren Regelblenden 60 und 64 fahren von ihrem freien Öffnungsquerschnitt her zu, wobei bis dahin über die beschriebene Kanalführung unter Einbezug des Längskanals 50 die erfindungsgemäße Barriereeinrichtung in Funktion ist und es zu einer Fluiderwärmung durch Reibung im Bereich der Blenden 60 und 64 kommt. Sind die Blenden 60 und 64 vollständig verschlossen und die Blende 62 vollständig geöffnet, kommt es dann über den reduzierten Querschnitt des Querkanals 56 am Druckversorgungsanschluss P immer noch zu einem reduzierten Durchfluss mit erhöhtem Widerstand, d.h. es entsteht Reibungswärme im Fluid an dieser Stelle.

Zusammenfassend lässt sich also feststellen, dass die eigentliche Aufheizfunktion über die genannten Bypassblenden 60, 62, 64 im Steuerschieberkolben 6 realisiert wird, wozu der vorzugsweise eingeregelte Druck am Druckanschluss P mit den beiden Tankkanälen T1, T2 in einer Art Bypass verbunden wird. Bei der geschilderten Betätigung des Ventils aus seiner gezeigten geschlossenen Mittelposition heraus wird der Bypass, wie dargelegt, für beide Betätigungsrichtungen des Steuerschiebers 6 gesperrt. Bei üblicher Betätigung des Ventils, sprich also bei entsprechender Druckversorgung für den jeweiligen Nutzanschluss A oder B, gibt es somit keinen direkten Verluststrom mehr, der nach Durchströmen der Barriereeinrichtung mit der einen Art von Regelblenden 60, 62, 64 versorgt ist. Ein vorzugsweise mittels einer Druckwaage (nicht dargestellt) eingeregelter Druck am Druckversorgungsanschluss P hat den Vorteil, dass die Größe in der geschlossenen Mittelposition des Ventils, bei der die Nutzanschlüsse A, B nicht versorgt sind, definiert ist, so dass der Verlustvolumenstrom zum Aufheizen nicht vom Pumpendruck am Druckversorgungsanschluss P abhängt. Aufgrund der geringen Größe der angegebenen Blenden 60, 62, 64 von ihrem freien maximalen Querschnitt her gibt es im Betrieb beim Erwärmen des Fluids kaum eine Abhängigkeit von dessen Viskosität und damit von der Temperatur. Da der Volumenstrom gleichmäßig über die Barriereeinrichtung und durch die angeschlossenen Kanäle P und T1 sowie T2 strömt, kann von einer gleichmäßigen Erwärmung des Ventilblocks über dessen gesamte Erstreckung ausgegangen werden. Dies hat so keine Entsprechung im Stand der Technik.

## Patentansprüche

1. Ventil mit einem Ventilgehäuse (2), das für einen Transport eines erwärmbaren Fluids, wie Hydrauliköl, mindestens einen Nutzanschluss (A, B), einen Druckversorgungsanschluss (P) und zwei Rücklaufanschlüsse (T1, T2) sowie einen in dem Ventilgehäuse (2) längsverfahrbar geführten Steuerschieber (6) aufweist, **dadurch gekennzeichnet, dass** das erwärmbare Fluid in zumindest einer Stellung des Steuerschiebers (6), bei der jeweils der Druckversorgungsanschluss (P) zumindest teilweise vom Nutzanschluss (A, B) getrennt ist, von diesem Druckversorgungsanschluss (P) ausgehend, über eine wärmeabgebende Verbindung in dem Steuerschieber (6), an die Rücklaufanschlüsse (T1, T2) als Verlustvolumenstrom gelangt, der als Wärmequelle dienend zumindest Bereiche des Steuerschiebers (6) erwärmt.

2. Ventil nach Anspruch 1, **dadurch gekennzeichnet, dass** der Verlustvolumenstrom über eine Barriereeinrichtung erwärmbar ist, die als Fluidwiderstand dienend aufgrund von Reibung Wärme auf das in den Steuerschieber (6) ein- und/oder austretende Fluid überträgt.

3. Ventil nach Anspruch 2, **dadurch gekennzeichnet, dass** die Barriereeinrichtung mindestens eine Art Regelblende (60, 62, 64) aufweist, deren freier Blendenquerschnitt im Regelbetrieb sich aus einer Zustellbewegung des Steuerschiebers (6) gegenüber dem Ventilgehäuse (2) im Bereich des einen Druckversorgungsanschlusses (P) und/oder der Rücklaufanschlüsse (T1, T2) ergibt, in die bzw. in den die wärmeabgebende Verbindung im Steuerschieber (6) ausmündet.

4. Ventil nach Anspruch 3, **dadurch gekennzeichnet, dass** mit zunehmender Vergrößerung des Blendenquerschnitts der einen Art Regelblende (62) an dem einen Druckversorgungsanschluss (P) bei gleichzeitiger Verengung (60, 64) desselben an den Rücklaufanschlüssen (T1, T2), mittels einer weiteren Art Regelblende (30), deren freier Blendenquerschnitt im Regelbetrieb sich aus einer Zustellbewegung des Steuerschiebers (6) gegenüber dem Ventilgehäuse (2) im Bereich des einen zuordenbaren Nutzanschlusses (A, B) ergibt, der Volumenstrom von diesem einen Druckversorgungsanschluss (P) zu diesem einen zuordenbaren Nutzanschluss (A, B) zunimmt.

5. Ventil nach einem der vorstehenden Ansprüche, **dadurch gekennzeichnet, dass** die wärmeabgebende Verbindung in dem Steuerschieber (6) durch einen Längskanal (50) gebildet ist, der mittels Querkanälen (54, 56, 58) im Regelbetrieb zumindest teilweise in Richtung des einen Druckversorgungs- (P) und der Rücklaufanschlüsse (T1, T2) austritt.

6. Ventil nach einem der Ansprüche 3 bis 5, **dadurch gekennzeichnet, dass** die eine Art Regelblende (60, 62, 64) im Ventilgehäuse (2) mindestens eine Ausnehmung (18, 20) aufweist, die jeweils permanent fluidführend mit dem einen Druckversorgungs- (P) oder dem jeweiligen einen Rücklaufanschluss (T1, T2) verbunden ist, und dass die jeweilige Ausnehmung (18, 20) im Ventilgehäuse (2) von dem Steuerschieber (6) abgedeckt ist.

7. Ventil nach einem der Ansprüche 4 bis 6, **dadurch gekennzeichnet, dass** die weitere Art Regelblende durch mindestens zwei gegenüberliegenden Gruppen von Steuernuten (30) am Außenumfang des Steuerkolbens (6) gebildet ist, die von einer umlaufenden Ringausnehmung (14, 16) im Steuerkolben (6) ausgehend sich endseitig verjüngen.

8. Ventil nach einem der vorstehenden Ansprüche, **dadurch gekennzeichnet, dass** in einer Neutralstellung des Steuerkolbens (6) zwei Nutzanschlüsse (A, B) vom Druckversorgungsanschluss (P) sowie von den zwei Rücklaufanschlüssen (T1, T2) separiert sind, die je einem der Nutzanschlüsse (A, B) funktionsgemäß zugeordnet sind.

9. Ventil nach einem der Ansprüche 4 bis 8, **dadurch gekennzeichnet, dass** jedem Rücklaufanschluss (T1, T2) und jedem Nutzanschluss (A, B) eine Regelblende der einen bzw. der weiteren Art zugeordnet ist.

10. Ventil nach einem der Ansprüche 4 bis 9, **dadurch gekennzeichnet, dass** mit Öffnen und Schließen der Regelblende (60, 64) der einen Art an den beiden Rücklaufanschlüssen (T1, T2) die Regelblende (62) der einen Art an dem Druckversorgungsanschluss (P) schließt bzw. öffnet.

## Claims

1. Valve having a valve housing (2) which, for transporting a heatable fluid, such as hydraulic oil, comprises at least one work port (A, B), a pressure supply port (P) and two return ports (T1, T2) as well as a valve spool (6) guided so as to be longitudinally movable in the valve housing (2), **characterised in that,** in at least one position of the valve spool (6) in which the pressure supply port (P) is in each case at least partially separated from the work port (A, B), the heatable fluid, starting from this pressure supply port (P), passes via a heat-emitting connection in the valve spool (6) to the return ports (T1, T2) as a loss-volume flow which, serving as a heat source, heats at least regions of the valve spool (6).

2. Valve according to claim 1, **characterised in that** the loss-volume flow can be heated via a barrier device which, serving as fluid resistance, transfers heat due to friction to the fluid entering and/or leaving the valve spool (6).

3. Valve according to claim 2, **characterised in that** the barrier device comprises at least one type of control orifice (60, 62, 64), the free orifice cross-section of which, in normal operation, results from an advancing movement of the valve spool (6) in relation to the valve housing (2) in the region of the one pressure supply port (P) and/or the return ports (T1, T2) into which the heat-emitting connection opens in the valve spool (6).

4. Valve according to claim 3, **characterised in that**, with increasing enlargement of the orifice cross-section of the one type of control orifice (62) at the one pressure supply port (P) with simultaneous narrowing (60, 64) of the same at the return ports (T1, T2), by means of a further type of control orifice (30), the free cross-section of which, in normal operation, results from an advancing movement of the valve spool (6) in relation to the valve housing (2) in the region of the one assignable work port (A, B), the volume flow from this one pressure supply port (P) to this one assignable work port (A, B) increases.

5. Valve according to one of the preceding claims, **characterised in that** the heat-emitting connection in the valve spool (6) is formed by a longitudinal channel (50) which, by means of transverse channels (54, 56, 58), exits in normal operation at least partially in the direction of the one pressure supply port (P) and the return ports (T1, T2).

6. Valve according to one of claims 3 to 5, **characterised in that** the one type of control orifice (60, 62, 64) in the valve housing (2) has at least one cut-out (18, 20) which in each case is permanently connected in a fluid-conducting manner to the one pressure supply port (P) or the respective one return port (T1, T2), and **in that** the respective cut-out (18, 20) in the valve housing (2) is covered by the valve spool (6).

7. Valve according to one of claims 4 to 6, **characterised in that** the further type of control orifice is formed by at least two opposing groups of control grooves (30) on the outer circumference of the control piston (6) which taper at the ends starting from a circumferential annular recess (14, 16) in the control piston (6).

8. Valve according to one of the preceding claims, **characterised in that**, in a neutral position of the control piston (6), two work ports (A, B) are separated from the pressure supply port (P) and from the two return ports (T1, T2), each of which is functionally associated with one of the work ports (A, B).

9. Valve according to one of claims 4 to 8, **characterised in that** a control orifice of the one or the other type is associated with each return port (T1, T2) and each work port (A, B).

10. Valve according to one of claims 4 to 9, **characterised in that**, on opening and closing the control orifice (60, 64) of the one type at the two return ports (T1, T2), the control orifice (62) of the one type closes or opens, respectively, at the pressure supply port (P).

## Revendications

1. Soupape comprenant un corps (2) de soupape, qui, pour le transport d'un fluide pouvant être réchauffé, comme de l'huile hydraulique, a au moins un raccord (A, B) utile, un raccord (P) d'alimentation en pression et deux raccords (T1, T2) de retour, ainsi qu'un tiroir (6) de commande, guidé avec possibilité de se déplacer longitudinalement dans le corps (2) de la soupape, **caractérisée en ce que** le fluide pouvant être réchauffé parvient, au moins dans une position du tiroir (6) de commande, dans laquelle respectivement le raccord (P) d'alimentation en pression est séparé au moins en partie du raccord (A, B) utile, en partant de ce raccord (P) d'alimentation en pression, par l'intermédiaire d'une liaison cédant de la chaleur dans le tiroir (6) de commande, aux raccords (T1, T2) de retour, en tant que courant en volume de perte, qui, en servant de source de chaleur, réchauffe au moins des parties du tiroir (6) de commande.

2. Soupape suivant la revendication 1, **caractérisée en ce que** le courant en volume de perte peut être réchauffé par un dispositif à barrière qui, en servant de résistance au fluide, en raison du frottement, transmet de la chaleur à du fluide entrant dans le tiroir (6) de commande et/ou en sortant.

3. Soupape suivant la revendication 2, **caractérisée en ce que** le dispositif à barrière a au moins une sorte du diaphragme (60, 62, 64) de réglage, dont le section transversale libre de diaphragme en fonctionnement de réglage provient d'un mouvement d'avance du tiroir (6) de commande par rapport au corps (2) de la soupape, dans la partie du un raccord (P) d'alimentation en pression et/ou des raccords (T1, T2) de retour, dans lequel ou dans lesquels débouche la liaison cédant de la chaleur dans le tiroir (6) de commande.

4. Soupape suivant la revendication 3, **caractérisée en ce que**, par un agrandissement croissant de la section transversale du un type de diaphragme (62) de réglage au un raccord (P) d'alimentation en pression, avec rétrécissement (60, 64) simultané de la même aux raccords (T1, T2) de retour, au moyen d'un autre type de diaphragme (30) de réglage, dont la section transversale libre de diaphragme en fonctionnement de réglage provient d'un mouvement d'avance du tiroir (6) de commande par rapport au corps (2) de la soupape, dans la partie du un raccord (A, B) utile pouvant être associé, le courant en volume augmente de ce un raccord (P) d'alimentation en pression à ce un raccord (A, B) utile pouvant être associé.

5. Soupape suivant l'une des revendications précédentes, **caractérisée en ce que** la liaison cédant de la chaleur dans le tiroir (6) de commande est formée par un conduit (50) longitudinal, qui, au moyen de conduits (54, 56, 58) transversaux, sort en fonctionnement de réglage au moins en partie en direction du un raccord (P) d'alimentation en pression et des raccords (T1, T2) de retour.

6. Soupape suivant l'une des revendications 3 à 5, **caractérisée en ce que** le un type de diaphragme (60, 62, 64) de réglage, dans le corps (2) de la soupape, a au moins un évidement (18, 20), qui communique respectivement fluidiquement de manière permanente avec le un raccord (P) d'alimentation en pression ou avec respectivement l'un des raccords (T1, T2) de retour, et **en ce que** l'évidement (18, 20) respectif, dans le corps (2) de la soupape, est recouvert du tiroir (6) de commande.

7. Soupape suivant l'une des revendications 4 à 6, **caractérisée en ce que** l'autre type de soupape de réglage est formé par au moins deux groupes opposés de rainures (30) de commande au pourtour extérieur du piston (6) de commande, qui se rétrécissent du côté de l'extrémité, en partant d'un évidement (14, 16) annulaire, faisant le tour, dans le piston (6) de commande.

8. Soupape suivant l'une des revendications précédentes, **caractérisée en ce que**, dans une position neutre du piston (6) de commande, deux raccords (A, B) utiles sont séparés du raccord (P) d'alimentation en pression, ainsi que des deux raccords (T1, T2) de retour, qui sont associés, conformément à la fonction, respectivement à l'un des raccords (A, B) utiles.

9. Soupape suivant l'une des revendications 4 à 8, **caractérisée** en ce en ce qu'un diaphragme de réglage du un type ou de l'autre type est associé à chaque raccord (T1, T2) de retour et à chaque raccord (A, B) utile.

10. Soupape suivant l'une des revendications 4 à 9, **caractérisée en ce qu'**avec l'ouverture et la fermeture du diaphragme (60, 64) de réglage du un type sur les deux raccords (T1, T2) de retour, le diaphragme (62) de réglage du un type se ferme et respectivement s'ouvre sur le raccord (P) d'alimentation en pression.
